# FASCICULE DE BREVET EUROPEEN

(11) **EP 3 007 597 B1**
(45) Date de publication et mention de la délivrance du brevet: **25.10.2017**
(21) Numéro de dépôt: 14768458.3
(22) Date de dépôt: 19.03.2014
(51) Int. Cl.: A47J 43/07, F16F 15/08

(54) **BOITIER D'APPAREIL ÉLECTROMÉNAGER COMPORTANT AU MOINS UN PIED D'APPUI**
GEHÄUSE EINER ELEKTRISCHEN HAUSHALTSVORRICHTUNG MIT MINDESTENS EINEM STÜTZFUSS
HOUSING OF AN ELECTRIC HOUSEHOLD APPLIANCE COMPRISING AT LEAST ONE SUPPORT FOOT

(30) Priorité: 22.03.2013 FR 1352599
(43) Date de publication de la demande: 20.04.2016
(73) Titulaire: SEB S.A., 69130 Ecully (FR)
(72) Inventeur: LABORDE, Daniel, 64170 Artix (FR); BESSONNET, Dominique, 64420 Artigueloutan (FR); DOMINGUEZ, Augustin, 65000 Tarbes (FR)
(74) Mandataire: Cémeli, Eric Philippe Laurent
(86) Numéro de dépôt international: PCT/FR2014/050647
(87) Numéro de publication internationale: WO 2014/147348

(56) Documents cités:
- CN-U- 201 743 547

## Description

La présente invention concerne le domaine technique des pieds d'appui disposés sous un appareil électroménager prévu pour reposer sur un support tel que par exemple un plan de travail ou une table.

La présente invention concerne notamment les appareils électroménagers culinaires comportant une motorisation susceptible de générer des vibrations dans le boîtier de l'appareil.

Il est connu de monter des pieds de support sous un boîtier d'appareil électroménager. Ces pieds de support sont généralement réalisés en matériau élastomère et permettent d'amortir les vibrations de l'appareil et de stabiliser l'appareil sur son support. Toutefois il arrive que ces pieds sortent de leur logement, notamment lors d'un déplacement de l'appareil.

Le document CN201743547U divulgue un boîtier d'appareil électroménager comportant un corps de boîtier sous lequel sont montés plusieurs pieds d'appui présentant une gorge périphérique retenue par une nervure annulaire issue du corps de boîtier. Une telle disposition permet de retenir les pieds d'appui. Toutefois les pieds d'appui doivent être montés en force. De plus la nervure annulaire présente une section semi circulaire, de sorte que le pied d'appui peut être retiré.

Un objet de la présente invention est de proposer un boîtier d'appareil électroménager comportant au moins un pied d'appui assemblé avec un corps de boîtier, qui ne puisse pas être désolidarisé involontairement du corps de boîtier.

Un autre objet de la présente invention est de proposer un boîtier d'appareil électroménager comportant au moins un pied d'appui assemblé avec un corps de boîtier, qui soit simple à réaliser et à assembler.

Ces objets sont atteints avec un boîtier d'appareil électroménager comportant un corps de boîtier et au moins un pied d'appui assemblé avec le corps de boîtier, le pied d'appui présentant une face latérale annulaire retenue par un dispositif de verrouillage solidaire du corps de boîtier, du fait que le dispositif de verrouillage comporte au moins un organe de verrouillage présentant une face biseautée prolongée par une face de retenue venant en prise avec la face latérale annulaire du pied d'appui ou avec le corps de boîtier pour retenir la face latérale annulaire du pied d'appui. Les faces biseautées permettent une mise en place aisée du ou des organes de verrouillage. Les faces de retenue assurent ensuite un maintien efficace du pied d'appui.

Selon une forme de réalisation avantageuse, le ou au moins l'un des pieds d'appui présente une géométrie annulaire ménageant un passage central. Cette disposition permet d'obtenir une surface d'appui plus importante pour un même volume de matière du pied d'appui.

Avantageusement alors, ledit ou au moins l'un desdits pieds d'appui présente une géométrie circulaire. Cette disposition permet de simplifier la mise en place du pied d'appui.

Selon une forme de réalisation avantageuse, le corps de boîtier présente un logement de vis agencé en regard du passage central.

Avantageusement encore, ledit ou au moins l'un desdits pieds d'appui est monté dans un logement externe annulaire du corps de boîtier.

Selon un mode de réalisation, le ou au moins l'un des organes de verrouillage est issu du corps de boîtier pour retenir la face latérale annulaire du pied d'appui. Le pied d'appui peut ainsi être monté directement sur le corps de boîtier.

Selon une forme de réalisation, la face latérale annulaire est une face latérale externe dudit pied d'appui.

Selon un autre mode de réalisation, le ou au moins l'un des organes de verrouillage appartient à un élément de verrouillage monté dans le passage central pour retenir la face latérale annulaire du pied d'appui, l'élément de verrouillage venant en prise avec le corps de boîtier pour maintenir le pied d'appui contre le corps de boîtier. Cette disposition permet notamment de réaliser un cache central occultant le logement de vis.

Toutefois l'élément de verrouillage ne comporte alors pas nécessairement au moins un organe de verrouillage présentant une face biseautée. Les objets de l'invention sont atteints aussi avec un boîtier d'appareil électroménager comportant un corps de boîtier et au moins un pied d'appui assemblé avec le corps de boîtier, ledit pied d'appui présentant une face latérale annulaire retenue par un dispositif de verrouillage solidaire du corps de boîtier, du fait que ledit pied d'appui présente une géométrie annulaire ménageant un passage central, et que le dispositif de verrouillage comporte un élément de verrouillage monté dans le passage central pour retenir la face latérale annulaire du pied d'appui, l'élément de verrouillage venant en prise avec le corps de boîtier pour maintenir le pied d'appui contre le corps de boîtier.

Avantageusement alors, l'élément de verrouillage comporte au moins un organe de verrouillage présentant une face de retenue venant en prise avec le corps de boîtier pour retenir le pied d'appui.

Si désiré, l'élément de verrouillage peut être assemblé avec le corps de boîtier par verrouillage à baïonnette.

Ainsi, selon une autre forme de réalisation, la face latérale annulaire est une face latérale interne dudit pied d'appui.

Avantageusement, le dispositif de verrouillage comporte plusieurs organes de verrouillage répartis annulairement et chacun des organes de verrouillage présente une longueur inférieure à l'espacement entre deux organes de verrouillage adjacents. Cette disposition permet notamment de faciliter la réalisation des organes de verrouillage par moulage.

Avantageusement alors, les organes de verrouillage sont espacés de manière régulière. Cette disposition permet de faciliter le montage du boîtier.

Selon une disposition avantageuse, le corps de boîtier présente deux faces d'appui distinctes comportant chacune au moins l'un des pieds d'appui. Ainsi le boîtier peut présenter plusieurs positions présentant des orientations différentes par rapport à la surface d'appui.

L'invention sera mieux comprise à l'étude de cinq exemples de réalisation et de variantes, pris à titre nullement limitatif, illustrés dans les figures annexées, dans lesquelles :
- la figure 1 est une vue partielle en perspective éclatée d'un premier exemple de réalisation d'un boîtier d'appareil électroménager comportant un pied d'appui assemblé avec un corps de boîtier,
- la figure 2 est une vue partielle en perspective du corps de boîtier illustré sur la figure 1,
- la figure 3 est une vue partielle en coupe du pied d'appui assemblé avec le corps de boîtier illustré sur les figures 1 et 2,
- la figure 4 est une vue agrandie d'une partie de la figure 3,
- la figure 5 est une vue partielle en coupe d'un pied d'appui assemblé avec un corps de boîtier selon un deuxième exemple de réalisation,
- la figure 6 est une vue partielle en perspective éclatée d'un troisième exemple de réalisation d'un boîtier d'appareil électroménager comportant un pied d'appui assemblé avec un corps de boîtier,
- la figure 7 est une vue partielle en perspective du corps de boîtier illustré sur la figure 6,
- la figure 8 est une vue partielle en coupe du pied d'appui assemblé avec le corps de boîtier illustré sur les figures 6 et 7,
- la figure 9 est une vue agrandie d'une partie de la figure 8,
- la figure 10 est une vue partielle en coupe d'un pied d'appui assemblé avec un corps de boîtier selon un quatrième exemple de réalisation,
- la figure 11 est une vue en élévation d'un cinquième exemple de réalisation d'un boîtier d'appareil électroménager comportant un pied d'appui assemblé avec un corps de boîtier, selon une première configuration d'utilisation comportant un accessoire hachoir à vis,
- la figure 12 est une vue en élévation et en éclaté du boîtier illustré sur la figure 11, selon une deuxième configuration d'utilisation comportant un accessoire mini-hachoir,
- La figure 13 est une vue en éclaté du corps de boîtier, d'un pied d'appui et d'un élément de verrouillage du boîtier illustré sur les figures 11 et 12,
- la figure 14 est une vue en perspective et en coupe du montage du pied d'appui sur le corps de boîtier illustré sur les figures 11 à 13.

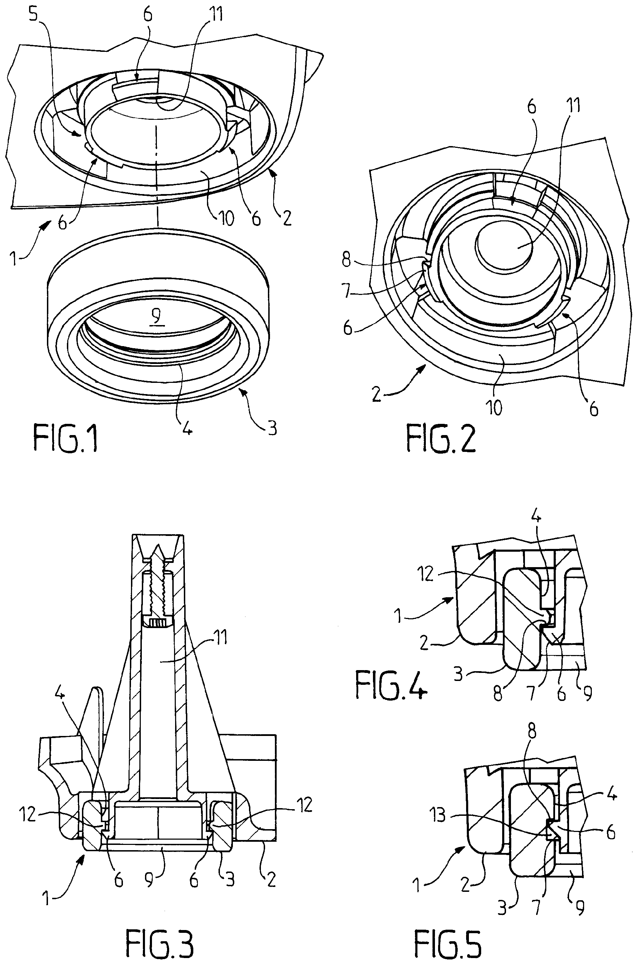

Un premier exemple de réalisation d'un boîtier 1 d'appareil électroménager selon l'invention est illustré sur les figures 1 à 4.

Le boîtier 1 comporte un corps de boîtier 2 et au moins un pied d'appui 3 assemblé avec le corps de boîtier 2. Le pied d'appui 3 est prévu pour reposer sur tout support approprié tel que par exemple un plan de travail ou une table. Le pied d'appui 3 est par exemple réalisé en NBR 60 shores. Le corps de boîtier 2 est par exemple réalisé en ABS. Le boîtier 1 peut appartenir à un appareil motorisé, notamment un appareil électroménager de préparation culinaire comportant un outil de travail susceptible de générer des vibrations, par exemple un hachoir à vis.

Le pied d'appui 3 présente une face latérale annulaire 4 retenue par un dispositif de verrouillage 5 solidaire du corps de boîtier 2. Le dispositif de verrouillage 5 comporte au moins un organe de verrouillage 6. Chaque organe de verrouillage 6 présente une face biseautée 7 pour la mise en place de l'organe de verrouillage 6, prolongée par une face de retenue 8.

Dans l'exemple de réalisation illustré sur les figures 1 à 4, les organes de verrouillage 6 sont issus du corps de boîtier 2. Tel que mieux visible sur la figure 4, la face de retenue 8 de l'un des organes de verrouillage 6 vient en prise avec le pied d'appui 3.

Le dispositif de verrouillage 5 comporte trois organes de verrouillage 6 répartis annulairement. Chacun des organes de verrouillage 6 présente une longueur inférieure à l'espacement entre deux organes de verrouillage 6 adjacents. De préférence, les organes de verrouillage 6 sont espacés de manière régulière.

Plus particulièrement, dans l'exemple de réalisation illustré sur les figures 1 à 4, chacun des pieds d'appui 3 présente une géométrie annulaire ménageant un passage central 9. Chaque pied d'appui 3 présente avantageusement une géométrie circulaire. Chaque pied d'appui 3 est monté dans un logement externe annulaire 10 du corps de boîtier 2. Le corps de boîtier 2 présente un logement de vis 11 agencé en regard du passage central 9. Ainsi le logement externe annulaire 10 du corps de boîtier 2 entoure le logement de vis 11.

Dans le premier exemple de réalisation illustré sur les figures 1 à 4, la face latérale annulaire 4 du pied d'appui 3 est une face latérale interne du pied d'appui 3. La face de retenue 8 de l'organe de verrouillage 6 vient en appui contre une nervure interne 12 du pied d'appui 3. De préférence la nervure interne 12 est annulaire. A titre de variante, la nervure interne 12 pourrait être remplacée par une face supérieure d'appui du pied d'appui 3.

Le boîtier 1 du premier exemple de réalisation illustré sur les figures 1 à 4 s'utilise de la manière suivante.

Le pied d'appui 3 est inséré dans le logement externe annulaire 10 du corps de boîtier 2. La souplesse de la matière du pied d'appui 3 permet la déformation de la face latérale annulaire 4 pour loger le pied d'appui 3 entre les organes de verrouillage 6. Les faces biseautées 7 des organes de verrouillage 6 facilitent la progression du pied d'appui 3 vers le fond du logement externe annulaire 10. Le caractère espacé des organes de verrouillage 6 facilite la déformation du pied d'appui 3 lors du contact avec les faces biseautées 7 pour la mise en place des organes de verrouillage 6. Lorsque les organes de verrouillage 6 atteignent la nervure interne 12 du pied d'appui 3, les faces de retenue 8 des organes de verrouillage 6 viennent en prise avec une face supérieure d'appui de la nervure interne 12. Le pied d'appui 3 est verrouillé en position sous le corps de boîtier 2 dans le logement externe annulaire 10.

Ainsi les pieds d'appui 3 peuvent être assemblés avec le corps de boîtier 2 par simple pression, et sont ensuite maintenus en place de manière pérenne par les organes de verrouillage 6 en prise avec les faces latérales annulaires 4 des pieds d'appui 3.

Le deuxième exemple de réalisation illustré sur la figure 5 diffère du premier exemple de réalisation illustré sur les figures 1 à 4 en ce que la face de retenue 8 de l'organe de verrouillage 6 vient en appui dans une rainure interne 13 du pied d'appui 3. De préférence la rainure interne 13 forme une gorge annulaire. A titre de variante, la rainure interne 13 pourrait être remplacée par une face inférieure d'appui du pied d'appui 3.

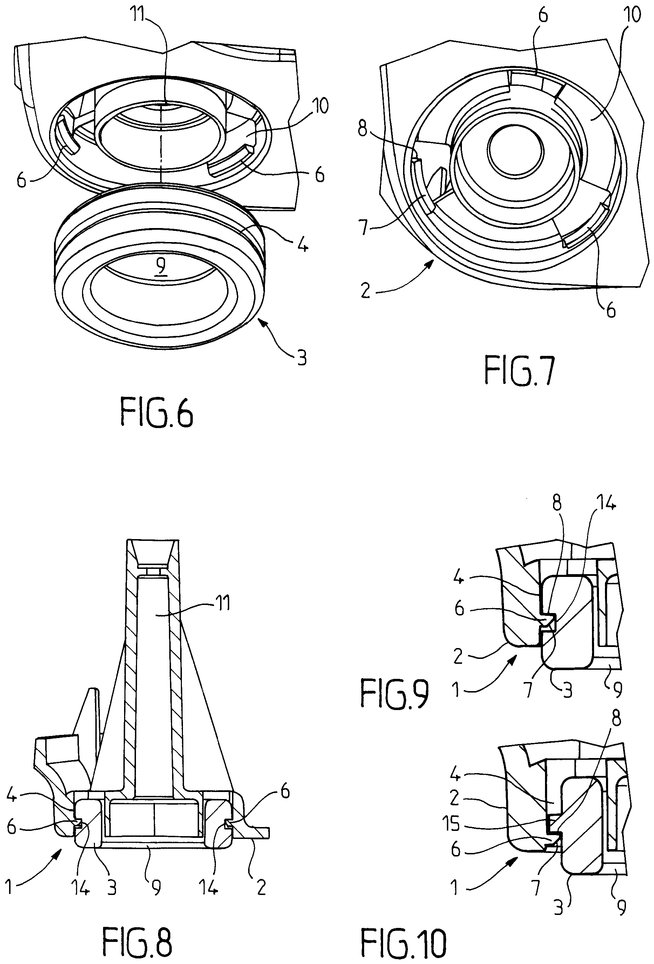

Le troisième exemple de réalisation illustré sur les figures 6 à 9 diffère du premier exemple de réalisation illustré sur les figures 1 à 4 et du deuxième exemple de réalisation illustré sur la figure 5 en ce que la face latérale annulaire 4 du pied d'appui 3 est une face latérale externe du pied d'appui 3. La face de retenue de l'organe de verrouillage 6 vient en appui dans une rainure externe 14 du pied d'appui 3. De préférence la rainure externe 14 forme une gorge annulaire. A titre de variante, la rainure externe 14 pourrait être remplacée par une face inférieure d'appui du pied d'appui 3.

Le quatrième exemple de réalisation illustré sur la figure 10 diffère du troisième exemple de réalisation illustré sur les figures 6 à 9 en ce que la face de retenue 8 de l'organe de verrouillage 6 vient en appui sur une nervure externe 15 du pied d'appui 3. De préférence la nervure externe 15 est annulaire. A titre de variante, la nervure externe 15 pourrait être remplacée par une face supérieure d'appui du pied d'appui 3.

Les boîtiers 1 des deuxième, troisième et quatrième exemple de réalisation s'utilisent de la manière comparable au boîtier 1 du premier exemple de réalisation.

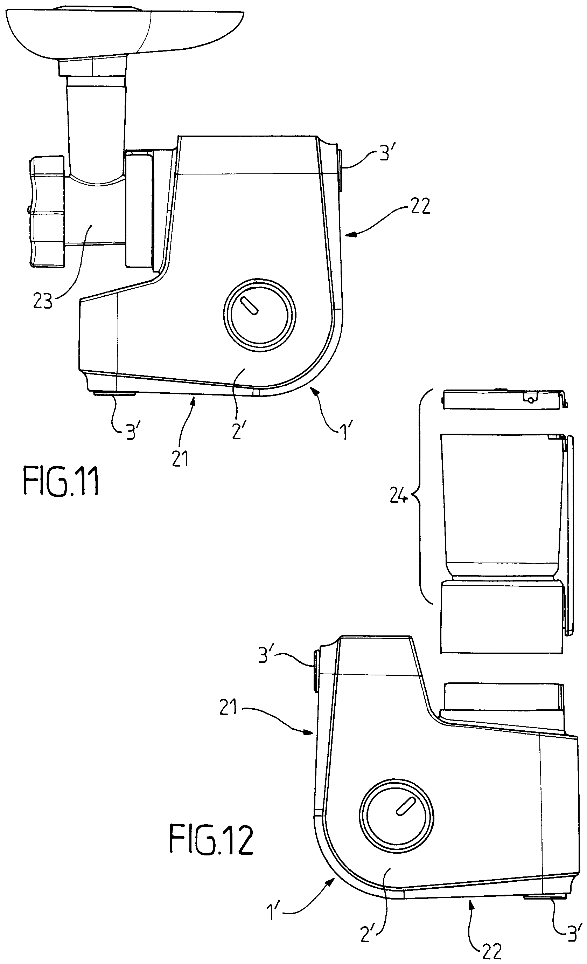

Un cinquième exemple de réalisation d'un boîtier 1' d'appareil électroménager selon l'invention est illustré sur les figures 11 à 14.

Le boîtier 1' comporte un corps de boîtier 2' et au moins deux pieds d'appui 3' assemblés avec le corps de boîtier 2'. Chacun des pieds d'appui 3' est prévu pour reposer sur tout support approprié tel que par exemple un plan de travail ou une table. Les pieds d'appui 3' sont par exemple réalisés en NBR 60 shores. Chacun des pieds d'appui 3' présente une géométrie annulaire ménageant un passage central 9', dans lequel est agencée la face latérale annulaire 4'. Les pieds d'appui 3' présentent avantageusement une géométrie circulaire. Chaque pied d'appui 3' est monté dans un logement externe annulaire 10' du corps de boîtier 2'. Le corps de boîtier 2' présente un logement de vis 11' agencé en regard du passage central 9'. Le corps de boîtier 2' est par exemple réalisé en ABS. Le boîtier 1' peut appartenir à un appareil motorisé, notamment un appareil électroménager de préparation culinaire comportant un outil de travail susceptible de générer des vibrations.

Plus particulièrement, tel que représenté sur les figures 11 et 12, le corps de boîtier 2' présente deux faces d'appui 21, 22 distinctes comportant chacune au moins l'un des pieds d'appui 3'. Ainsi la sortie d'entrainement du boîtier 1' peut occuper deux positions différentes. Dans la configuration représentée sur la figure 11, un accessoire hachoir à vis 23 est monté sur la sortie d'entrainement du boîtier 1' disposée en position latérale. Dans la configuration représentée sur la figure 12, un accessoire mini-hachoir 24 est monté sur la sortie d'entrainement du boîtier 1' disposée en position supérieure. De ce fait, l'une des deux faces d'appui 21, 22 est visible, quelle que soit la configuration de l'appareil posé sur un support.

Le cinquième exemple de réalisation illustré sur les figures 11 à 14 diffère des exemples de réalisation précédents en ce que le dispositif de verrouillage 5' comporte un élément de verrouillage 16 monté dans le passage central 9' pour retenir le pied d'appui 3'. Ainsi les organes de verrouillage 6' appartiennent à l'élément de verrouillage 16. L'élément de verrouillage 16 vient en prise avec le corps de boîtier 2' pour maintenir le pied d'appui 3' contre le corps de boîtier 2'.

Chaque pied d'appui 3' présente une face latérale annulaire 4' retenue par un dispositif de verrouillage 5' solidaire du corps de boîtier 2'.

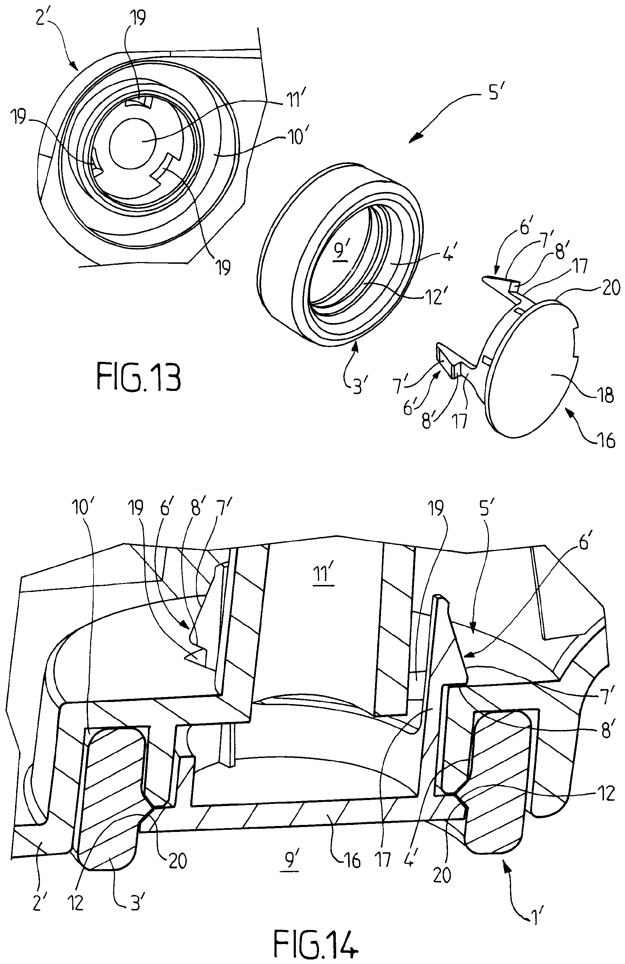

Dans l'exemple de réalisation illustré sur les figures 13 et 14, le dispositif de verrouillage 5' comporte trois organes de verrouillage 6' répartis annulairement. Chacun des organes de verrouillage 6' présente une longueur inférieure à l'espacement entre deux organes de verrouillage 6' adjacents, et de préférence au moins deux fois inférieure à l'espacement entre deux organes de verrouillage 6' adjacents. De préférence, les organes de verrouillage 6' sont espacés de manière régulière.

Plus particulièrement, tel que visible sur les figures 13 et 14, chacun des organes de verrouillage 6' est formé sur une patte élastique 17 issue d'un corps central 18 de l'élément de verrouillage 16. Chacun des organes de verrouillage 6' présente une face de retenue 8' prévue pour venir en prise avec le corps de boîtier 2. Selon la forme de réalisation illustrée sur les figures 13 et 14, chacun des organes de verrouillage 6' présente une face biseautée 7' prolongée par la face de retenue 8'. Ainsi les extrémités des pattes élastiques 17 peuvent être engagées dans des ouvertures 19 ménagées dans le corps de boîtier 2', de sorte que les faces biseautées 7' soient repoussées lors de l'engagement des pattes élastiques 17 dans les ouvertures 19 et que les faces de retenue 8' viennent en prise avec le corps de boîtier 2' lorsque les pattes élastiques 17 ont traversé les ouvertures 19.

L'élément de verrouillage 16 est monté dans le passage central 9' pour retenir la face latérale annulaire 4' du pied d'appui 3'. A cet effet, l'élément de verrouillage 16 comporte une face d'appui 20 venant en appui contre la face latérale annulaire 4' du pied d'appui 3'. Ainsi la face latérale annulaire 4' est une face latérale interne dudit pied d'appui 3'. Tel que mieux visible sur les figures 13 et 14, la face d'appui 20 de l'élément de verrouillage 16 vient en appui contre une nervure interne 12' du pied d'appui 3'. De préférence la face d'appui 20 et la nervure interne 12' sont annulaires. A titre de variante, la nervure interne 12' pourrait être remplacée par une face inférieure d'appui du pied d'appui 3' ménagée dans le passage central 9'.

Le boîtier 1' du cinquième exemple de réalisation illustré sur les figures 11 à 14 s'utilise de la manière suivante.

Le pied d'appui 3' est inséré dans le logement externe annulaire 10' du corps de boîtier 2'. L'élément de verrouillage 16 est ensuite assemblé avec le corps de boîtier 2'. La souplesse des pattes élastiques 17 permet leur déformation pour insérer les faces biseautées 7' des organes de verrouillage 6' dans les ouvertures 19 du corps de boîtier 2'. Lorsque les faces biseautées 7' ont été complètement insérées dans les ouvertures 19, les faces de retenue 8' des organes de verrouillage 6' viennent en prise avec le corps de boîtier 2' pour retenir le pied d'appui 3', du fait du rappel élastique des pattes élastiques 17. La face d'appui 20 de l'élément de verrouillage 16 vient alors retenir la face inférieure d'appui de la nervure interne 12'. Le pied d'appui 3' est verrouillé en position sous le corps de boîtier 2' dans le logement annulaire externe 10' du corps de boîtier 2'. Le corps central 18 de l'élément de verrouillage 16 forme un cache obturant le logement de vis 11'. Les vis montées dans les logements de vis 11' du corps de boîtier 2' peuvent ainsi rester cachées, quelle que soit la position du corps de boîtier 2'.

Ainsi les pieds d'appui 3' peuvent être mis en place dans le corps de boîtier 2' par simple pression, l'élément de verrouillage 16 étant également mis en place par simple pression, les organes de verrouillage 6' en prise avec les faces latérales annulaires 4' des pieds d'appui 3' maintenant en place les pieds d'appui de manière pérenne.

A titre de variante, le corps de boîtier 2' ne présente pas nécessairement deux faces d'appui 21, 22 distinctes, mais peut notamment comporter une seule face d'appui.

A titre de variante, le boîtier 1' ne comporte pas nécessairement au moins deux pied d'appui 3', mais peut comporter si désiré un seul pied d'appui 3'.

A titre de variante, les organes de verrouillage 6' de l'élément de verrouillage 16 ne sont pas nécessairement insérés dans une ouverture 19 du corps de boîtier 2' pour retenir le pied d'appui 3'. Les organes de verrouillage 6' peuvent venir en prise avec toute partie appropriée du corps de boîtier 2' tel que par exemple une nervure ou un décrochement présentant une face de retenue.

A titre de variante, les organes de verrouillage 6' de l'élément de verrouillage 16 peuvent présenter une face de retenue 8' insérée dans une ouverture 19 du corps de boîtier 2' et venant en prise avec le corps de boîtier 2' pour retenir le pied d'appui 3', sans nécessairement comporter une patte élastique présentant une face biseautée 7' prolongée par la face de retenue 8'. Notamment l'élément de verrouillage 16 peut être assemblé avec le corps de boîtier 2' par verrouillage à baïonnette. Si désiré l'un au moins des organes de verrouillage et le corps de boîtier peuvent alors comporter notamment au moins une rainure, une nervure ou un bossage pour maintenir en prise la face de retenue dudit organe de verrouillage avec le corps de boîtier.

A titre de variante, les dispositifs de verrouillage 5, 5' ne comportent pas nécessairement trois organes de verrouillage 6 ; 6' répartis annulairement. Le dispositif de verrouillage 5 peut comporter avantageusement entre un et huit organes de verrouillage 6, de préférence répartis annulairement, sans que nécessairement tous lesdits organes de verrouillage 6 viennent en prise avec le pied d'appui 3 dans un même plan ou sur une même face latérale annulaire 4 du pied d'appui 3. Le dispositif de verrouillage 5' peut comporter avantageusement entre un et huit organes de verrouillage 6', pas nécessairement répartis annulairement. Le dispositif de verrouillage 5' peut comporter par exemple plusieurs organes de verrouillage 6' alignés.

La présente invention n'est nullement limitée aux exemples de réalisation décrits et à leurs variantes, mais englobe de nombreuses modifications dans le cadre des revendications.

## Revendications

1. Boîtier (1 ; 1') d'appareil électroménager comportant un corps de boîtier (2 ; 2') et au moins un pied d'appui (3 ; 3') assemblé avec le corps de boîtier (2 ; 2'), ledit pied d'appui (3 ; 3') présentant une face latérale annulaire (4 ; 4') retenue par un dispositif de verrouillage (5 ; 5') solidaire du corps de boîtier (2 ; 2'), **caractérisé en ce que** le dispositif de verrouillage (5 ; 5') comporte au moins un organe de verrouillage (6 ; 6') présentant une face biseautée (7 ; 7') prolongée par une face de retenue (8 ; 8') venant en prise avec la face latérale annulaire (4) du pied d'appui (3) ou avec le corps de boîtier (2') pour retenir la face latérale annulaire (4') du pied d'appui (3').

2. Boîtier (1 ; 1') selon la revendication 1, **caractérisé en ce que** le ou au moins l'un des pieds d'appui (3 ; 3') présente une géométrie annulaire ménageant un passage central (9 ; 9').

3. Boîtier (1 ; 1') selon la revendication 2, **caractérisé en ce que** ledit ou au moins l'un desdits pieds d'appui (3 ; 3') présente une géométrie circulaire.

4. Boîtier (1 ; 1') selon l'une des revendications 2 ou 3, **caractérisé en ce que** le corps de boîtier (2 ; 2') présente un logement de vis (11 ; 11') agencé en regard du passage central (9 ; 9').

5. Boîtier (1 ; 1') selon l'une des revendications 2 à 4, **caractérisé en ce que** ledit ou au moins l'un desdits pieds d'appui (3 ; 3') est monté dans un logement externe annulaire (10 ; 10') du corps de boîtier (2 ; 2').

6. Boîtier (1) selon l'une des revendications 1 à 5, **caractérisé en ce que** le ou au moins l'un des organes de verrouillage (6) est issu du corps de boîtier (2) pour retenir la face latérale annulaire (4) du pied d'appui (3).

7. Boîtier (1) selon l'une des revendications 1 à 6, **caractérisé en ce que** la face latérale annulaire (4) est une face latérale externe dudit pied d'appui (3).

8. Boîtier (1') selon l'une des revendications 2 à 6, **caractérisé en ce que** le ou au moins l'un des organes de verrouillage (6') appartient à un élément de verrouillage (16) monté dans le passage central (9') pour retenir la face latérale annulaire (4') du pied d'appui (3'), l'élément de verrouillage (16) venant en prise avec le corps de boîtier (2') pour maintenir le pied d'appui (3') contre le corps de boîtier (2').

9. Boîtier (1') d'appareil électroménager comportant un corps de boîtier (2') et au moins un pied d'appui (3') assemblé avec le corps de boîtier (2'), ledit pied d'appui (3') présentant une face latérale annulaire (4') retenue par un dispositif de verrouillage (5') solidaire du corps de boîtier (2'), **caractérisé en ce que** ledit pied d'appui (3') présente une géométrie annulaire ménageant un passage central (9'), et **en ce que** le dispositif de verrouillage (5') comporte un élément de verrouillage (16) monté dans le passage central (9') pour retenir la face latérale annulaire (4') du pied d'appui (3'), l'élément de verrouillage (16) venant en prise avec le corps de boîtier (2') pour maintenir le pied d'appui (3') contre le corps de boîtier (2').

10. Boîtier (1') selon la revendication 9, **caractérisé en ce que** l'élément de verrouillage (16) comporte au moins un organe de verrouillage (6') présentant une face de retenue (8') venant en prise avec le corps de boîtier (2') pour retenir le pied d'appui (3').

11. Boîtier (1') selon l'une des revendications 9 ou 10, **caractérisé en ce que** l'élément de verrouillage (16) est assemblé avec le corps de boîtier (2') par verrouillage à baïonnette.

12. Boîtier (1 ; 1') selon l'une des revendications 1 à 6 ou 8 à 11, **caractérisé en ce que** la face latérale annulaire (4 ; 4') est une face latérale interne dudit pied d'appui (3 ; 3').

13. Boîtier (1 ; 1') selon l'une des revendications 1 à 12, **caractérisé en ce que** le dispositif de verrouillage (5 ; 5') comporte plusieurs organes de verrouillage (6 ; 6') répartis annulairement et **en ce que** chacun des organes de verrouillage (6 ; 6') présente une longueur inférieure à l'espacement entre deux organes de verrouillage (6 ; 6') adjacents.

14. Boîtier (1 ; 1') selon la revendication 13, **caractérisé en ce que** les organes de verrouillage (6 ; 6') sont espacés de manière régulière.

15. Boîtier (1') selon l'une des revendications 1 à 14, **caractérisé en ce que** le corps de boîtier (2') présente deux faces d'appui (21 ; 22) distinctes comportant chacune au moins l'un des pieds d'appui (3').

## Patentansprüche

1. Gehäuse (1 ; 1') eines elektrischen Haushaltsgeräts, das einen Gehäusekörper (2 ; 2') und zumindest einen Auflagefuß (3 ; 3') aufweist, der mit dem Gehäusekörper (2 ; 2') zusammengebaut ist, wobei der Auflagefuß (3 ; 3') eine ringförmige Seitenfläche (4 ; 4') aufweist, die durch eine Verriegelungsvorrichtung (5 ; 5') zurückgehalten wird, die mit dem Gehäusekörper (2 ; 2') fest verbunden ist, **dadurch gekennzeichnet, dass** die Verriegelungsvorrichtung (5 ; 5') zumindest ein Verriegelungsorgan (6 ; 6') aufweist, das eine abgeschrägte Fläche (7 ; 7') aufweist, die durch eine Rückhaltefläche (8 ; 8') verlängert ist, die mit der ringförmigen Seitenfläche (4) des Auflagefußes (3) oder mit dem Gehäusekörper (2') in Eingriff steht, um die ringförmige Seitenfläche (4') des Auflagefußes (3') zurückzuhalten.

2. Gehäuse (1 ; 1') nach Anspruch 1, **dadurch gekennzeichnet, dass** der oder mindestens der eine der Auflagefüße (3 ; 3') eine ringförmige Geometrie aufweist, in der ein zentraler Durchgang (9 ; 9') ausgebildet ist.

3. Gehäuse (1 ; 1') nach Anspruch 2, **dadurch gekennzeichnet, dass** der oder mindestens der eine der Auflagefüße (3 ; 3') eine kreisförmige Geometrie aufweist.

4. Gehäuse (1 ; 1') nach einem der Ansprüche 2 oder 3, **dadurch gekennzeichnet, dass** der Gehäusekörper (2 ; 2') eine Schraubenaufnahme (11 ; 11') aufweist, die gegenüber dem zentralen Durchgang (9 ; 9') angeordnet ist.

5. Gehäuse (1 ; 1') nach einem der Ansprüche 2 bis 4, **dadurch gekennzeichnet, dass** der oder zumindest einer der Auflagefüße (3 ; 3') in einem ringförmigen äußeren Gehäuse (10 ; 10') des Gehäusekörpers (2 ; 2') angebracht ist.

6. Gehäuse (1) nach einem der Ansprüche 1 bis 5, **dadurch gekennzeichnet, dass** das oder mindestens das eine der Verriegelungsorgane (6) aus dem Gehäusekörper (2) hervorsteht, um die ringförmige Seitenfläche (4) des Auflagefußes (3) zurückzuhalten.

7. Gehäuse (1) nach einem der Ansprüche 1 bis 6, **dadurch gekennzeichnet, dass** die ringförmige Seitenfläche (4) eine äußere Seitenfläche des Auflagefußes (3) ist.

8. Gehäuse (1') nach einem der Ansprüche 2 bis 6, **dadurch gekennzeichnet, dass** das oder mindestens das eine der Verriegelungsorgane (6') zu einem Verriegelungselement (16) gehört, das in dem zentralen Durchgang (9') angebracht ist, um die ringförmige Seitenfläche (4') des Auflagefußes (3') zurückzuhalten, wobei das Verriegelungselement (16) mit dem Gehäusekörper (2') in Eingriff steht, um den Auflagefuß (3') gegen den Gehäusekörper (2') beizubehalten.

9. Gehäuse (1') eines elektrischen Haushaltsgeräts, das einen Gehäusekörper (2') und mindestens einen Auflagefuß (3') umfasst, der mit dem Gehäusekörper (2') zusammengebaut ist, wobei der Auflagefuß (3') eine ringförmige Seitenfläche (4') aufweist, die durch eine Verriegelungsvorrichtung (5') zurückgehalten wird, die mit dem Gehäusekörper (2') fest verbunden ist, **dadurch gekennzeichnet, dass** der Auflagefuß (3') eine ringförmige Geometrie aufweist, in der ein zentraler Durchgang (9') ausgebildet ist, und dass die Verriegelungsvorrichtung (5') ein Verriegelungselement (16) umfasst, das in dem zentralen Durchgang (9') angebracht ist, um die ringförmige Seitenfläche (4') des Auflagefußes (3') zurückzuhalten, wobei das Verriegelungselement (16) mit dem Gehäusekörper (2') in Eingriff steht, um den Auflagefuß (3') gegen den Gehäusekörper (2') beizubehalten.

10. Gehäuse (1') nach Anspruch 9, **dadurch gekennzeichnet, dass** das Verriegelungselement (16) mindestens ein Verriegelungsorgan (6') umfasst, das eine Rückhaltefläche (8') aufweist, die mit dem Gehäusekörper (2') in Eingriff steht, um den Auflagefuß (3') zurückzuhalten.

11. Gehäuse (1') nach einem der Ansprüche 9 oder 10, **dadurch gekennzeichnet, dass** das Verriegelungselement (16) mit dem Gehäusekörper (2') durch eine Bajonettverriegelung zusammengebaut ist.

12. Gehäuse (1 ; 1') nach einem der Ansprüche 1 bis 6 oder 8 bis 11, **dadurch gekennzeichnet, dass** die ringförmige Seitenfläche (4 ; 4') eine innere Seitenfläche des Auflagefußes (3 ; 3') ist.

13. Gehäuse (1 ; 1') nach einem der Ansprüche 1 bis 12, **dadurch gekennzeichnet, dass** die Verriegelungsvorrichtung (5 ; 5') mehrere Verriegelungsorgane (6 ; 6') umfasst, die ringförmig verteilt sind, und dass jedes der Verriegelungsorgane (6 ; 6') eine Länge von weniger als dem Abstand zwischen zwei benachbarten Verriegelungsorganen (6 ; 6') aufweist.

14. Gehäuse (1 ; 1') nach Anspruch 13, **dadurch gekennzeichnet, dass** die Verriegelungsorgane (6 ; 6') regelmäßig beabstandet sind.

15. Gehäuse (1') nach einem der Ansprüche 1 bis 14, **dadurch gekennzeichnet, dass** der Gehäusekörper (2') zwei getrennte Auflageflächen (21 ; 22) aufweist, die jeweils mindestens einen der Auflagefüße (3') aufweisen.

## Claims

1. Housing (1; 1') of an electric household appliance comprising a housing body (2; 2') and at least one support foot (3; 3') assembled with the housing body (2; 2'), said support foot (3; 3') having an annular side surface (4; 4') held by a locking device (5; 5') rigidly connected to the housing body (2; 2'), **characterised in that** the locking device (5; 5') comprises at least one locking member (6; 6') having a bevelled surface (7; 7') extended by a retaining face (8; 8') engaging with the annular side surface (4) of the support foot (3) or with the housing body (2') so as to hold the annular side surface (4') of the support foot (3').

2. Housing (1; 1') according to claim 1, **characterised in that** the or at least one of the support feet (3; 3') has an annular geometry that arranges a central passage (9; 9').

3. Housing (1; 1') according to claim 2, **characterised in that** said or at least one of said support feet (3; 3') has a circular geometry.

4. Housing (1; 1') according to one of claims 2 or 3, **characterised in that** the housing body (2; 2') has a screw housing (11; 11') arranged facing the central passage (9; 9').

5. Housing (1; 1') according to one of claims 2 to 4, **characterised in that** said or at least one of said support feet (3; 3') is mounted in an annular external housing (10; 10') of the housing body (2; 2').

6. Housing (1) according to one of claims 1 to 5, **characterised in that** the or at least one of the locking members (6) comes from the housing body (2) so as to hold the annular side surface (4) of the support foot (3).

7. Housing (1) according to one of claims 1 to 6, **characterised in that** the annular side surface (4) is an external side surface of said support foot (3).

8. Housing (1') according to one of claims 2 to 6, **characterised in that** the or at least one of the locking members (6') belongs to a locking element (16) mounted in the central passage (9') to hold the annular side surface (4') of the support foot (3'), with the locking element (16) engaging with the housing body (2') in order to maintain the support foot (3') against the housing body (2').

9. Housing (1') of an electric household appliance comprising a housing body (2') and at least one support foot (3') assembled with the housing body (2'), said support foot (3') having an annular side surface (4') held by a locking device (5') rigidly connected to the housing body (2'), **characterised in that** said support foot (3') has an annular geometry that arranges a central passage (9'), and **in that** the locking device (5') comprises a locking element (16) mounted in the central passage (9') so as to hold the annular side surface (4') of the support foot (3'), with the locking element (16) engaging with the housing body (2') in order to maintain the support foot (3') against the housing body (2').

10. Housing (1') according to claim 9, **characterised in that** the locking element (16) comprises at least one locking member (6') having a retaining face (8') engaging with the housing body (2') so as to hold the support foot (3').

11. Housing (1') according to one of claims 9 or 10, **characterised in that** the locking element (16) is assembled with the housing body (2') by bayonet-type locking.

12. Housing (1; 1') according to one of claims 1 to 6 or 8 to 11, **characterised in that** the annular side surface (4; 4') is an internal side surface of said support foot (3; 3').

13. Housing (1; 1') according to one of claims 1 to 12, **characterised in that** the locking device (5; 5') comprises several locking members (6; 6') distributed annularly and **in that** each one of the locking members (6; 6') has a length less than the spacing between two adjacent locking members (6; 6').

14. Housing (1; 1') according to claim 13, **characterised in that** the locking members (6; 6') are regularly spaced.

15. Housing (1') according to one of claims 1 to 14, **characterised in that** the housing body (2') has two separate support surfaces (21; 22) with each one comprising at least one of the support feet (3').
